# EUROPEAN PATENT SPECIFICATION

(11) **EP 1 662 175 B1**
(45) Date of publication and mention of the grant of the patent: **18.06.2014**
(21) Application number: 05025259.2
(22) Date of filing: 18.11.2005
(51) Int. Cl.: F16H 7/08

(54) **Chain tensioner**
Kettenspanner
Tendeur de chaîne

(30) Priority: 29.11.2004 JP 2004343662; 04.01.2005 JP 2005000113
(43) Date of publication of application: 31.05.2006
(73) Proprietor: NTN Corporation, Osaka (JP)
(72) Inventor: Sato, Seiji, Iwata-shi Shizuoka (JP); Kitano, Satoshi, Iwata-shi Shizuoka (JP); Hayakawa, Hisashi, Iwata-shi Shizuoka (JP)
(74) Representative: Grünecker, Kinkeldey, Stockmair & Schwanhäusser

(56) References cited:
- DE-A1- 4 035 202
- DE-A1- 4 035 254
- DE-A1- 19 707 498
- JP-A- 10 009 350
- JP-A- 11 148 539
- JP-A- 61 215 848
- JP-A- 2002 156 013

## Description

The present invention relates to a chain tensioner for keeping a constant tension of a chain for driving camshafts of an engine.

A chain tensioner of this type is disclosed in JP patent publication 11-148539A.

The chain tensioner disclosed in this publication includes a housing defining a cylinder chamber having an opening at one end thereof and fixed to a stationary member such as an engine block. A plunger to be pressed against a chain is slidably inserted in the cylinder chamber. The plunger is formed with a bore axially extending from its rear end, i.e. its end inside of the cylinder chamber. A serration-shaped internal thread is formed on the inner wall of the bore of the plunger. A screw rod is inserted in the bore with its serration-shaped external thread in threaded engagement with the internal thread of the bore. The screw rod is formed with a spring-receiving hole axially extending from its front end, i.e. its end inside of the bore of the plunger. A return spring is mounted in the spring-receiving hole to bias the plunger outwardly of the cylinder chamber.

In the cylinder chamber of the housing, the plunger defines a pressure chamber. An oil supply passage formed in the housing communicates with the pressure chamber. A check valve is provided at the outlet of the oil supply passage. The check valve is configured to keep the oil supply passage closed while the pressure of hydraulic oil in the pressure chamber is higher than the pressure of hydraulic fluid in the oil supply passage.

When the tension of the chain increases, under the force from the chain that tends to push the plunger into the cylinder chamber, the pressure flank of the internal thread of the plunger is pressed against the pressure flank of the external thread of the screw rod. When the force pushing the plunger into the cylinder chamber exceeds the force of the return spring, the plunger is pushed into the cylinder chamber until the force of the return spring balances with the force pushing the plunger into the cylinder chamber. The tension of the chain is thus kept constant.

When the chain slackens, the plunger can be quickly pushed out of the cylinder chamber while rotating relative to the screw rod with the clearance flanks of the internal and external threads sliding on each other, thus re-tensioning the chain.

When the chain vibrates, the plunger moves back and forth within the range of the axial clearance between the internal and external threads, and when it is being pushed into the cylinder chamber, the check valve closes the oil supply passage, thereby dampening the vibration of the chain with the hydraulic damper function of hydraulic oil sealed in the pressure chamber.

In this conventional chain tensioner, as hydraulic oil, engine oil is fed into the pressure chamber through the oil supply passage by means of an oil pump. Engine oil inevitably contains various foreign objects such as metallic powder produced due to abrasion between engine parts and during machining of engine parts. If such foreign objects enter the pressure chamber, they may get into between the internal and external threads of the plunger and the screw rod and/or between the valve seat and valve body of the check valve. If foreign objects get into between the internal and external threads, frictional resistance therebetween will increase, making it difficult to smoothly rotate the plunger and the screw rod relative to each other. This in turn inhibits the smooth operation of the chain tensioner.

If foreign objects get into between the valve seat and valve body of the check valve, the check valve will become unable to sufficiently perform its function as a hydraulic damper. That is, the check valve will be unable to sufficiently dampen the vibration of the chain.

If such an oil supply type chain tensioner is mounted in a chain cover, it is necessary to form a mounting hole in the chain cover in which the housing of the chain tensioner is mounted, and also an oil passage having an outlet that opens to the inner periphery of the mounting hole. In order to feed hydraulic oil into the pressure chamber through the oil passage and the oil supply passage, the outlet of the oil passage and the inlet of the oil passage have to be precisely aligned with each other. But since the outlet of the oil passage and the inlet of the oil supply passage are both relatively small in diameter, it is extremely difficult to align them with each other due to mounting errors of the chain tensioner and dimensional errors of the housing of the chain tensioner. A chain tensioner of this type which can be easily mounted to a chain cover is therefore acutely desired

In JP 10-009350 A, a chain tensioner according to the preamble of claim 1 is disclosed comprising a check valve, a cylinder chamber, a plunger and an oil filter. The oil filter precludes foreign matter included in oil from intruding into the check valve or between the sliding surfaces of the cylinder chamber and the plunger. For supplying oil with the chain tensioner, an inlet forms a connection between the cylinder chamber and the outside of the chain tensioner. Oil can pass through the inlet in the direction to the inside of the tensioner and to the cylinder chamber, respectively. At the end of the inlet, before the check valve, the diameter of the inlet becomes larger in comparison to its beginning. In this larger diameter part the oil filter is installed. The oil filter is located behind the check valve blocking the access to the oil filter for maintenance.

it is, therefore, an object of the invention to facilitate replacement and maintenance of an oil filter for a chain tensioner.

The object is solved according to the invention by means of a chain tensioner comprising the features of claim 1.

Advantageous embodiments can be derived from the subclaims.

According to an embodiment, there is provided a chain tensioner comprising a housing configured to be mounted on a mounting member and defining a cylinder chamber having an open end, a plunger slidably mounted in the cylinder chamber and defining a bore axially extending from a rear end face thereof that is located inside of the cylinder chamber, a return spring mounted in the bore and biasing the plunger outwardly of the cylinder chamber, the bore having an inner peripheral surface formed with an internal thread having a serration-shaped section, a screw rod having an outer peripheral surface formed with an external thread having a serration-shaped section, the screw rod being inserted in the bore with the external thread in threaded engagement with the internal thread, the housing being formed with an oil supply passage having an outlet communicating with a pressure chamber defined in the cylinder chamber by the plunger, a check valve provided at the outlet of the oil supply passage and configured to close the oil supply passage when the pressure in the pressure chamber exceeds the pressure in the oil supply passage, and an oil filter detachably mounted in the oil supply passage for preventing any foreign objects that may be contained in hydraulic oil fed into the oil supply passage from being introduced into the pressure chamber.

In a specific arrangement, the pressure chamber communicates with the outside of the housing through an oil discharge passage, the chain tensioner further comprising a relief valve mounted in the oil discharge passage for opening the oil discharge passage if the pressure in the pressure chamber exceeds a threshold. With this arrangement, if the pressure in the pressure chamber exceeds the threshold, the relief valve opens, thus discharging hydraulic oil through the discharge passage. This prevents excessive tension of the chain.

From another aspect there is provided a chain tensioner comprising a housing configured to be inserted in a mounting hole formed in a mounting member and fixed to the mounting member, the housing defining a cylinder chamber which opens at one end of the housing near one end of the mounting hole, a plunger slidably mounted in the cylinder chamber, a return spring mounted in the cylinder chamber and biasing the plunger outwardly of the cylinder chamber, the housing being formed with an oil supply passage having an outlet communicating with a pressure chamber defined in the cylinder chamber by the plunger, and an inlet open to an inner periphery of the mounting hole and communicating with an oil passage formed in the mounting member, a check valve provided at the outlet of the oil supply passage and configured to close the oil supply passage when the pressure in the pressure chamber exceeds the pressure in the oil supply passage, and an oil filter detachably mounted in the oil supply passage for preventing any foreign objects that may be contained in hydraulic oil fed into the oil supply passage from being introduced into the pressure chamber.

In this case, a circumferential groove is preferably formed in at least one of an outer periphery of the housing and the inner periphery of the mounting hole, the circumferential groove having a width greater than the diameter of the oil supply passage at the inlet and being arranged such that the inlet of the oil supply passage is within the width of the circumferential groove. With this arrangement, simply by inserting the chain tensioner into the mounting hole of the mounting member, the outlet of the oil passage and the inlet of the oil supply passage reliably communicate with each other through the circumferential groove. This increases the freedom of design of the chain tensioner and also makes it easier to manufacture and assemble the chain tensioner.

In any of the above-described chain tensioners, if the oil filter has too small a mesh size, the flow resistance of the oil filter will increase, making it more difficult to smoothly supply hydraulic oil into the pressure chamber. This in turn makes it difficult for the tensioner to sufficiently perform its hydraulic damper function at the initial stage of operation of the engine. If its mesh size is too large, the operation of the tensioner will be influenced.

Therefore, the chain tensioner has preferably a mesh size in the range of 50 to 400 micrometers.

The oil filter provided in the oil supply passage removes foreign objects contained in engine oil as hydraulic oil, thereby preventing foreign objects from being fed into the pressure chamber. This prevents malfunction of the chain tensioner due to foreign objects getting stuck between moving parts of the chain tensioner in the pressure chamber.

### BRIEF DESCRIPTION OF THE DRAWINGS

Other features and objects of the present invention will become apparent from the following description made with reference to the accompanying drawings, in which:
Fig. 1 is a partially cutaway front view of a chain system including the chain tensioner embodying the present invention;
Fig. 2 is a front view in cross-section of the chain tensioner of Fig. 1;
Fig. 3 is a partial enlarged view of Fig. 2, showing its portion where the oil filter is mounted;
Fig. 4 is a graph showing that an area where the operation of the chain tensioner is influenced is determined by the number and size of foreign objects in the pressure chamber;

Fig. 5 is a vertical sectional front view of a chain tensioner according to anther embodiment of the present invention;

Fig. 6 is a sectional view taken along line VI-VI of Fig. 5; and

Fig. 7 is an enlarged sectional view of the retraction restriction arrangement.

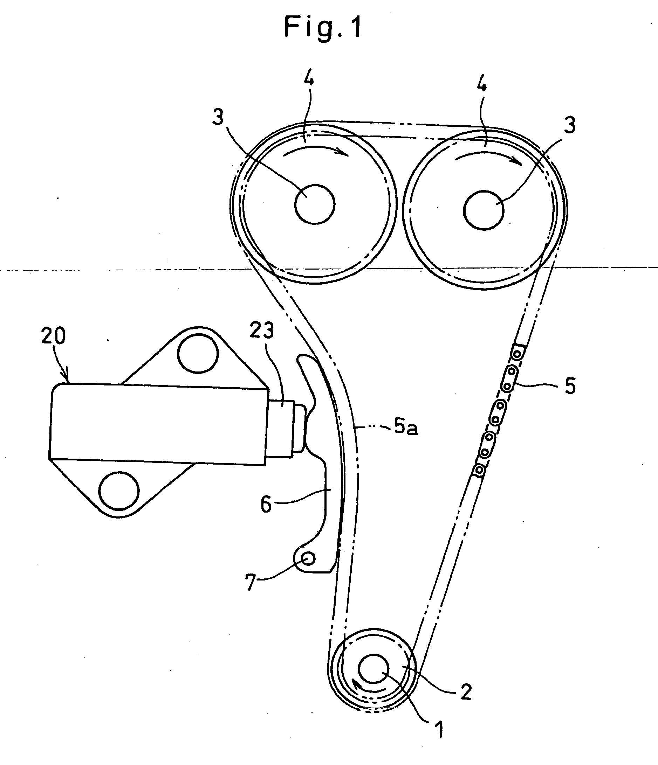

The embodiments of the invention are now described with reference to the drawings. Fig. 1 shows a chain system for driving camshafts of an internal combustion engine. It includes a sprocket 2 mounted to one end of a crankshaft 1, sprockets 4 each mounted to one end of one of camshafts 3, and a chain 5 trained around the sprockets 2 and 4. The rotation of the crankshaft 1 is thus transmitted to the cam shafts 3 through the chain 5.

A chain guide 6 has its bottom end pivotally supported on a shaft 7, and is pressed against a slack side 5a of the chain 5 by a chain tensioner 20 to keep a constant tension in the chain 5.

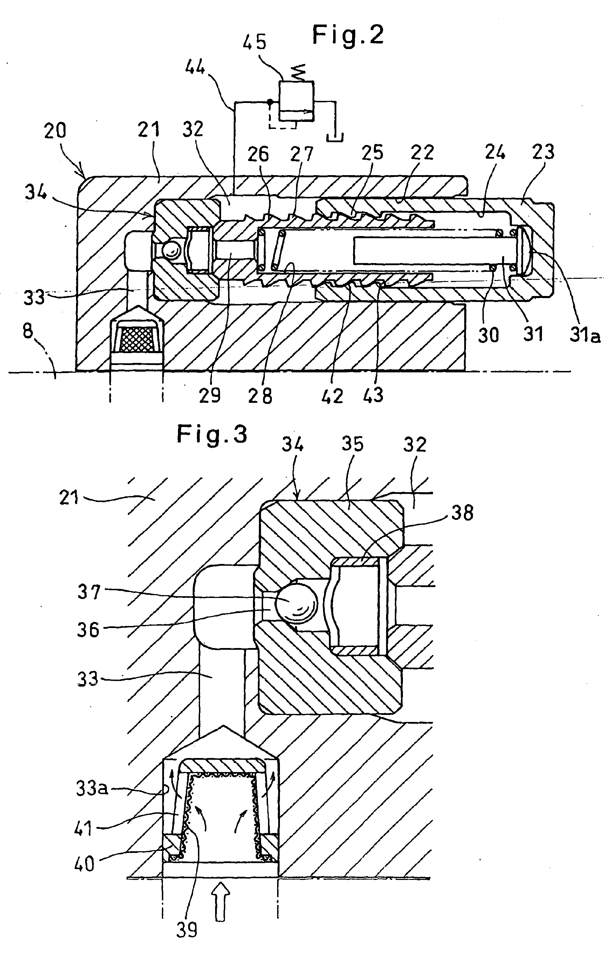

As shown in Fig. 2, the chain tensioner 20 includes a housing 21 mounted on an engine block 8 by bolts.

The housing 21 defines a cylinder chamber 22 having an open end facing the chain guide 6. A plunger 23 is slidably inserted in the cylinder chamber 22.

The plunger 23 is formed with a bore 24 extending axially from its rear end that is located inside of the cylinder chamber 22. An internal thread is formed on the inner wall of the bore 24 near its open end. A screw rod 26 is inserted in the bore 24 with its external thread 27 on the outer periphery thereof in threaded engagement with the internal thread 25.

The screw rod 26 is formed with a spring-receiving hole 28 having an open end located inside of the bore 24 of the plunger 23, and is also formed with a small-diameter hole 29 extending from the closed end of the spring-receiving hole 28 to the rear end of the screw rod 26.

Between the closed end of the spring-receiving hole 28 and the closed end of the bore 24, a return spring 30 and a spring seat 31 are mounted. The return spring 30 biases the plunger 23 out of the cylinder chamber 22.

If the contact area between the spring seat 31 and the closed end of the bore 24 is large, large rotational resistance will be produced between the plunger 23 and the screw rod 26 when they rotate relative to each other. This makes it difficult for the plunger 23 and the screw rod 26 to rotate smoothly relative to each other. According to the present invention, in order to minimize the rotational resistance between the plunger and the screw rod, the spring seat 31 has a hemispherical surface 31 facing the closed end of the bore 24 and in point contact with the closed end of the bore 24.

The housing 21 is formed with an oil supply passage 33 communicating with a pressure chamber 32 defined in the cylinder chamber 22 by the plunger 23. A check valve 34 is provided at the outlet of the oil supply passage 33.

As shown in Fig. 3, the check valve 34 comprises a valve seat 35 pressed into an end portion of the pressure chamber 32 and having a valve hole 36 communicating with the oil supply passage 33, a valve body 37 in the form of a ball for opening and closing the valve hole 36, and a retainer 38 pressed into the valve hole 36 from its outlet for restricting the movement of the valve body 37 and thus the degree of opening of the valve hole 36. The check valve 34 is configured to close the oil supply passage 33 while the hydraulic oil pressure in the pressure chamber 32 is higher than the hydraulic oil pressure in the oil supply passage 33.

The oil supply passage 33 has a large-diameter inlet 33a in which an oil filter 39 is mounted. The oil filter 39 is supported by a cap-shaped support 40 having openings 41 and detachably mounted in the oil inlet 33a.

The oil filter 39 removes foreign objects contained in hydraulic oil before being fed into the oil supply passage 33. If the oil filter 39 has too small a mesh size, it will increase the flow resistance of hydraulic oil, thus hindering a smooth feed of hydraulic oil through the oil supply passage 33 into the pressure chamber 32 with an oil pump, so that it will take a long time until the pressure chamber 32 is filled with hydraulic oil. This in turn makes it impossible for the chain tensioner to instantly perform its function. as a hydraulic damper.

If the oil filter 39 has too large a mesh size, the oil filter will allow foreign objects that are large enough to impair the operation of the chain tensioner to be fed into the pressure chamber 32. Thus, the oil filter 39 according to the present invention has a mesh size in the range of 50 to 400 micrometers.

As shown in Fig. 2, both the internal thread 25 formed on the inner wall of the plunger 23 and the external thread 27 formed on the outer periphery of the screw rod 26 have a serration-shaped section. That is, their pressure flanks 42, which are adapted to be pressed against each other under the tension in the chain, have a greater flank angle than their clearance flanks 43. The flank angles and the lead angle of the serration-shaped threads are determined such that when the plunger is pushed by the chain, the plunger and the screw rod are much more difficult to rotate relative to each other than when the plunger is pushed outwardly of the cylinder chamber.

That is, when the plunger 23 is pushed hard by the chain, the plunger 23 will not retract. But when vibrations of the chain act on the plunger 23, the plunger will repeatedly move axially in the range determined by the maximum axial gap between the pressure flanks. When the plunger is pushed into the cylinder chamber, the pressure flanks instantaneously contact each other. Such instantaneous contact of the pressure flanks causes the plunger to slightly rotate relative to the screw rod. Thus, when the pressure flanks instantaneously and discontinuously contact each other, the plunger 23 discontinuously rotates relative to the screw rod and is thus discontinuously pushed into the cylinder chamber, i.e. pushed in such a direction as to reduce the volume of the pressure chamber 32 until the force pushing the plunger into the cylinder chamber balances with the force of the return spring 32.

On the other hand, when the tension in the chain decreases, the plunger 23 can be smoothly pushed out of the cylinder chamber by the return spring 30.

The pressure chamber 32 communicates with the outside through an oil discharge passage 44 in which a relief valve 45 is provided. The relief valve 45 is configured to open the oil discharge passage 44 when the pressure in the pressure chamber 32 exceeds a threshold.

The tension in the chain 5 of the chain system shown in Fig. 1 fluctuates due to fluctuation in torque when the rotation of the crankshaft 1 is being transmitted to the camshafts 3. While the tension in the slack side 5a of the chain 5 is increasing, the plunger 23 is pushed by the chain through the chain guide 6, so that the pressure flank 42 of the internal thread 25 is pressed against the pressure flank 42 of the external thread 27.

While the force pushing the plunger 23 into the cylinder chamber is greater than the force of the return spring 30, the plunger 23 is allowed to rotate relative to the screw rod 26 in such a direction that the plunger 23 retracts into the cylinder chamber until the force pushing the plunger into the cylinder chamber balances with the force of the return spring 30.

When the plunger 23 is pushed into the cylinder chamber, the pressure in the pressure chamber 32 increases, so that the oil supply , passage 33 is closed by the check valve 33. As the pressure in the pressure chamber 32 increases, hydraulic oil in the pressure chamber 32 leaks through a gap between sliding contact surfaces of the plunger and the cylinder chamber, so that the volume of the pressure chamber 32 decreases, thus effectively dampening vibrations of the chain 5.

When the tension in the slack side 5a of the chain 5 decreases due to fluctuations in torque, the plunger 23 will be pushed outwardly by the return spring 30 with the screw rod 26 rotating while being in sliding contact with the valve seat 35.

Since the flank angle and the lead angle of the clearance flanks 43 are determined such that the plunger 23 can easily protrude outwardly, when the tension in the slack side of the chain decreases, the plunger 23 will quickly protrude outwardly, thereby instantly re-tensioning the chain 5.

When the plunger 23 begins to move outwardly, the pressure in the pressure chamber 32 drops sharply, so that the check valve 34 quickly opens the oil supply passage 33, allowing hydraulic oil to smoothly flow into the pressure chamber 32. The volume of the pressure chamber 32 thus smoothly increases.

As hydraulic oil, engine oil is used. Engine oil inevitably contains various foreign objects such as metallic powder. If such foreign objects enter the pressure chamber 32, they may get into between the internal and external threads 25 and 27 of the plunger and the screw rod and/or between the valve seat and valve body 37 of the check valve 34, thus impairing the performance of the chain tensioner 20.

According to the present invention, the oil filter 39 mounted in the oil supply passage 33 remove any foreign objects contained in hydraulic oil that is being supplied into the oil supply passage 33, thereby preventing any foreign objects from getting into the pressure chamber 3 and impairing the performance of the chain tensioner 20.

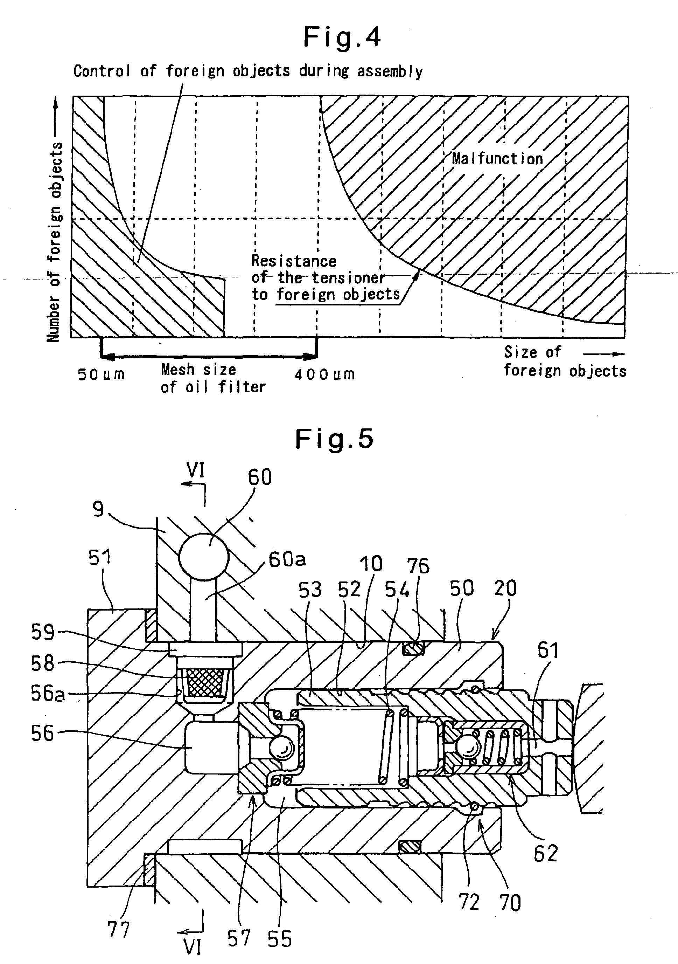

A plurality of oil filters 39 that are different in mesh size from each other were mounted one at a time on the chain tensioner 20 to examine how the number and size of foreign objects contained in the hydraulic oil influence the performance of the chain tensioner. The results are shown in Fig. 4.

As shown in Fig. 4, if the foreign objects have particle diameters exceeding 400 micrometers, the chain tensioner 20 tends to malfunction. Fig. 4 also shows that the greater the size of the foreign objects, the more the chain tensioner 20 is likely to malfunction even if they are small in number. Thus, in order to prevent the malfunction of the chain tensioner 20, it is important to remove foreign objects that are greater than 400 micrometers in diameter.

As shown in Fig. 4, if the mesh size of the oil filter is less than 50 micrometers, hydraulic oil cannot smoothly flow into the pressure chamber 32 irrespective of the number of foreign objects.

Therefore, the oil filter 39 has preferably a mesh size of 50 to 400 micrometers.

Figs. 5 to 7 show a chain tensioner according to another embodiment of the invention. As shown in Fig. 5, the chain tensioner 20 is mounted in a mounting hole 10 formed in a chain cover 9 which covers the entire chain system of Fig. 1.

The chain tensioner 20 includes a cylindrical housing 50 fitted in the mounting hole 10. The housing 50 has a flange 51 at its rear end, and is inserted into the mounting hole 10 with its front end first until the flange 50 abuts the outer surface of the chain cover 9. In this state, the housing 50 is secured to the chain cover 9 by inserting bolts (not shown) through the flange 51 into the chain cover 9 and tightening them.

As shown in Fig. 5, the housing 50 defines a cylinder chamber 52 having a closed end. A plunger 53 is slidably mounted in the cylinder chamber 52 and is biased outwardly toward the chain guide by a return spring 54, which is also mounted in the cylinder chamber 52.

The housing 50 is formed with an oil supply passage 56 communicating with a pressure chamber 55 defined in the cylinder chamber 52 by the plunger 53. A check valve 57 is provided at the outlet of the oil supply passage 56. The check valve 57 is configured to close the oil supply passage 56 when the hydraulic oil pressure in the pressure chamber 55 exceeds the hydraulic oil pressure in the oil supply passage 56, thereby preventing backflow of hydraulic oil in the pressure chamber 55 into the oil supply passage 56.

The oil supply passage 56 has an inlet 56a that opens at the outer surface of the housing 50. An oil filter 58 having a mesh size in the range of 50 to 400 micrometers is inserted in the inlet 56a. A circumferential groove 59 is formed in the outer periphery of the housing 50 so as to pass the inlet 56a. The groove 59 has a width greater than the bore of the inlet 56a

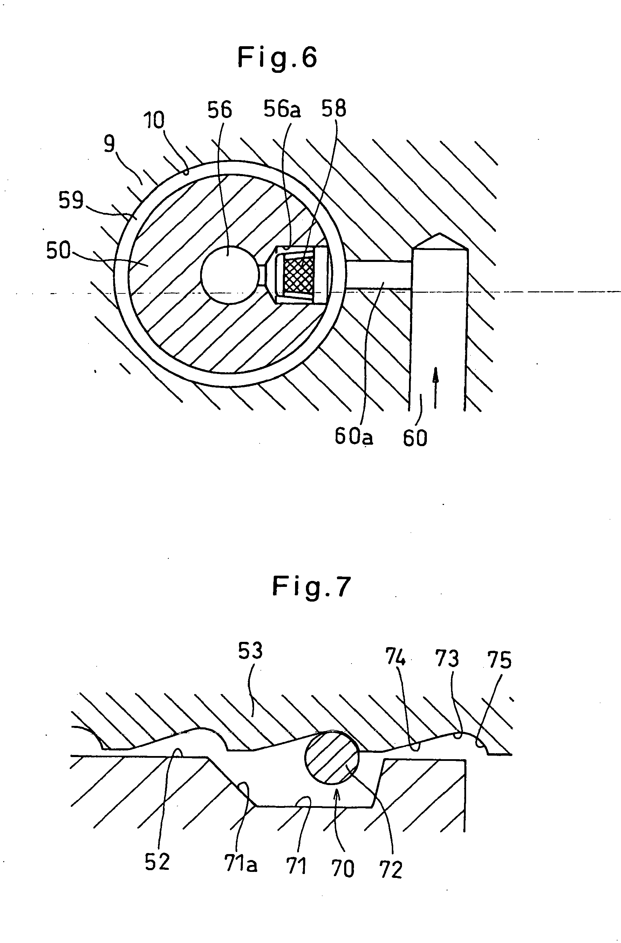

As shown in Figs. 5 and 6, an oil passage 60 is formed in the chain cover 9 which has an outlet 60a configured to communicate with the circumferential groove 59 of the housing 50 with the housing 50 fully inserted in the mounting hole 10.

Hydraulic oil is supplied into the oil passage 60 by means of an oil pump. The oil in the supply passage 60 is then fed through the circumferential groove 59 and the oil supply passage 56 into the pressure chamber 55.

The pressure chamber 55 communicates with the outside through an oil discharge passage 61 in which a relief valve 62 is provided. The relief valve 62 is configured to open the oil discharge passage 61 when the hydraulic oil pressure in the pressure chamber 55 exceeds a threshold to allow leakage of hydraulic oil in the pressure chamber 55.

Between the housing 50 and the plunger 53, a retraction restricting arrangement 70 is provided which restricts the retraction of the plunger 53 toward the closed end of the cylinder chamber 52.

As shown in Fig. 7, the retraction restricting arrangement 70 comprises a ring-receiving groove 71 formed in the inner wall of the cylinder chamber 52 near its open end, a radially resiliently deformable register ring 72 received in the ring-receiving groove 71, a plurality of circumferential grooves 73 formed in the outer periphery of the plunger 53 so as to be axially spaced apart from each other at equal intervals. The register ring 72 is configured to be press-fitted in any of the circumferential grooves 73. Each circumferential groove 73 comprises a tapered surface 74 of which the diameter decreases gradually toward the front end of the plunger 53, and a jaw portion 75 extending from the front end of the tapered surface 75.

When the plunger 53 advances, the register ring 72 moves along the tapered surface 74 of one of the circumferential grooves 73 while radially outwardly expanding and fits into the next circumferential groove 73, thereby allowing the plunger 53 to advance freely. When the plunger 53 retracts, the register ring 72 will get trapped between the jaw portion 75 of one of the circumferential grooves 73 and a rear wall 71a of the ring-receiving groove 71, thereby preventing any further retraction of the plunger 53.

While the crankshaft 1 of Fig. 1 is rotating, due to fluctuations in the angular velocity and torque during each rotation of the crankshaft 1, the chain 5 will vibrate. When the chain 5 slackens, the return spring 54 pushes the plunger 53 outwardly, thereby re-tensioning the chain 5.

While the plunger 53 is advancing, the register ring 72 will move along the tapered surface 74 of one of the circumferential grooves 73 while radially outwardly expanding, so that the register ring 72 will never hinder smooth advancement of the plunger 53. When the plunger 53 advances by a distance greater than the pitch of the circumferential grooves 73, the register ring 72 will fit into the next circumferential groove 73.

When the plunger 53 begins to advance, the pressure 55 in the pressure chamber 55 will fall below the hydraulic oil pressure in the oil supply passage 56. This causes the check valve 57 to open instantly, allowing hydraulic oil to be introduced into the pressure chamber 55 from the oil supply passage 56. The volume of the pressure chamber 55 thus increases smoothly.

When the tension in the chain 5 increases, the chain 5 will apply pushing force to the plunger 53 through the chain guide 6, thus increasing the pressure in the pressure chamber 55. The check valve 57 thus closes the oil supply passage 56, so that hydraulic oil sealed in the pressure chamber dampens the pushing force applied to the plunger 53.

If the pressure in the pressure chamber 55 exceeds the threshold of the relief valve 62, the relief valve 62 will open, thus discharging hydraulic oil in the pressure chamber 55 through the discharge passage 61. This prevents breakage of the chain 5 due to excessive tension in the chain 5.

As described above, the chain tensioner 20 is inserted into the mounting hole 10 formed in the chain cover 9 and fixed to the chain cover 9 by inserting bolts through the flange 51 into the chain cover 9 and tightening them.

Since the circumferential groove 59 formed in the outer periphery of the housing 50 has a width greater than the bore of the inlet 56a of the oil supply passage 56 and is arranged such that the inlet 56a is within the width of the circumferential groove 59, even if the outlet 60a of the oil passage 60 and the inlet 56a of the oil supply passage are displaced circumferentially and/or axially of the housing from each other, the oil supply passage 56 is reliably kept in communication with the oil passage 60.

Thus, the chain tensioner 20 can be mounted easily because no high accuracy is required in mounting the tensioner 20. This arrangement also offers freedom of design of the chain tensioner 20.

With the chain tensioner 20 mounted in the mounting hole 10, a seal ring 76 and a seal member 77 are disposed between the inner wall of the mounting hole 10 and the housing 50 to prevent leakage of hydraulic oil.

The circumferential groove 59 may be formed in the inner wall of the mounting hole 10, instead of forming such a groove in the outer periphery of the housing 50 as in the embodiment.

In this embodiment, too, the oil filter 58 provided in the inlet 56a of the oil supply passage 56 serves to remove any foreign objects contained in hydraulic oil supplied into the oil supply passage 56.

Thus, hydraulic oil in the pressure chamber is substantially free of foreign objects, so that no foreign objects will get stuck in the check valve 57 or relief valve 62. This ensures trouble-free operation of the chain tensioner.

## Claims

1. A chain tensioner (20) comprising a housing (21) configured to be mounted on a mounting member (8) and defining a cylinder chamber (22) having an open end, a plunger (23) slidably mounted in said cylinder chamber (22) and defining a bore (24) axially extending from a rear end face thereof that is located inside of said cylinder chamber (22), a return spring (30) mounted in said bore (24) and biasing said plunger (23) outwardly of said cylinder chamber (22), said bore (24) having an inner peripheral surface formed with an internal thread (25) having a serration-shaped section, a screw rod (26) having an outer peripheral surface formed with an external thread (27) having a serration-shaped section, said screw rod (26) being inserted in said bore (24) with said external thread (27) in threaded engagement with said internal thread (25), said housing (21) being formed with an oil supply passage (33) having an outlet communicating with a pressure chamber (32) defined in said cylinder chamber (22) by said plunger (23), and a check valve (34) provided at said outlet of said oil supply passage (33) and configured to close said oil supply passage (33) when the pressure in said pressure chamber (32) exceeds the pressure in said oil supply passage (33),
**characterized in that**
said oil supply passage (33) has a large-diameter inlet (33a) opening at the outer periphery of the housing (21), and said chain tensioner further comprises an oil filter (39) detachably mounted in said large-diameter inlet (33a) of said oil supply passage (33) for preventing any foreign objects that may be contained in hydraulic oil fed into said oil supply passage (33) from being introduced into said pressure chamber (32).

2. The chain tensioner (20) of claim 1 wherein said pressure chamber (32) communicates with the outside of the housing (21) through an oil discharge passage (44), said chain tensioner further comprising a relief valve (45) mounted in said oil discharge passage (44) for opening said oil discharge passage (44) if the pressure in said pressure chamber (32) exceeds a threshold.

3. The chain tensioner (20) of any of claims 1 or 2 wherein the oil filter (39) is inserted in a cap-shaped support (40) which is detachably mounted in the large-diameter inlet (33a).

4. The chain tensioner (20) of any of claims 1 to 3 wherein the cap-shaped support (40) being formed with openings (41) through which oil which has been filtered by the oil filter (39) can flow into the oil supply passage (33).

5. The chain tensioner (20) of any of claims 1 to 4 wherein said oil filter (39, 58) has a mesh size in the range of 50 to 400 micrometers.

## Patentansprüche

1. Kettenspanner (20), aufweisend ein Gehäuse (21) das zum Montieren an einem Montageglied (8) konfiguriert ist und eine Zylinderkammer (22) mit einem offenen Ende definiert, einen Kolben (23), der in einer Zylinderkammer (22) verschiebbar montiert ist und eine Bohrung (24) definiert, die sich axial von einer hinteren Endfläche derselben erstreckt, die innerhalb der Zylinderkammer (22) angeordnet ist, eine Rückstellfeder (30), die in der Bohrung (24) montiert ist und den Kolben (23) aus der Zylinderkammer (22) heraus vorspannt, wobei die Bohrung (24) eine Innenumfangsfläche aufweist, die mit einem Innengewinde (25) ausgebildet ist, das einen verzahnungsförmigen Abschnitt hat, einen Gewindestab (26), der an einer Außenumfangsfläche mit einem Außengewinde (27) ausgebildet ist, das einen verzahnungsförmigen Abschnitt hat, wobei der Gewindestab (26) in die Bohrung (24) mit dem Außengewinde (27) in Gewindeeingriff mit dem Innengewinde (25) eingesetzt wird, wobei das Gehäuse (21) mit einer Ölzufuhrpassage (33) ausgebildet ist, die einen Auslass aufweist, der mit einer Druckkammer (32), die in der Zylinderkammer (22) von dem Kolben (23) definiert wird, kommuniziert, und ein Sperrventil (34), das an dem Auslass der Ölzufuhrpassage (33) vorgesehen ist und zum Schließen der Ölzufuhrpassage (33), wenn der Druck in der Druckkammer (32) den Druck in der Ölzufuhrpassage (33) überschreitet, konfiguriert ist.
**dadurch gekennzeichnet, dass**
die Ölzufuhrpassage (33) einen Großdurchmessereinlass (33a) aufweist, der sich am Außenumfang des Gehäuses (21) öffnet, und der Kettenspanner ferner einen Ölfilter (39) aufweist, der in dem Großdurchmessereinlass (33a) der Ölfzufuhrpassage (33) zum Verhindern, dass Fremdobjekte, die in dem Hydrauliköl enthalten sind, das in die Ölzufuhrpassage (33) zugeführt werden, in die Druckkammer (32) eingeführt werden, abnehmbar montiert ist.

2. Kettenspanner (20) gemäß Anspruch 1, wobei die Durckkammer (32) mit der Außenseite des Gehäuses (21) durch eine Ölablasspassage (44) kommuniziert, wobei der Kettenspanner ferner ein Entlastungsventil (45) aufweist, das in der Ölablasspassage (44) zum Öffnen der Ölablasspassage (44) montiert ist, falls der Druck in der Druckkammer (32) einen Schwellenwert überschreitet.

3. Kettenspanner (20) gemäß einem der Ansprüche 1 oder 2, wobei der Ölfilter (39) in eine haubenförmige Aufnahme (40) eingesetzt ist, die in dem Großdurchmessereinlass (33a) abnehmbar montiert ist.

4. Kettenspanner (20) gemäß einem der Ansprüche 1 bis 3, wobei die haubenförmige Aufnahme (40) mit Öffnungen (41) ausgebildet ist, durch welche Öl, das mittels des Ölfilter (39) gefiltert worden ist, in die Ölzufuhrpassage (33) hineinströmen kann.

5. Kettenspanner (20) gemäß einem der Ansprüche 1 bis 4, wobei der Ölfilter (39, 58) eine Maschenweite im Bereich von 50 bis 400 Mikrometer aufweist.

## Revendications

1. Tendeur de chaîne (20) comprenant un boîtier (21) configuré pour être monté sur un élément de montage (8) et définissant une chambre de cylindre (22) ayant une extrémité ouverte, un piston (23) monté de manière coulissante dans ladite chambre de cylindre (22) et définissant un alésage (24) s'étendant axialement depuis sa face d'extrémité arrière, qui est situé à l'intérieur de ladite chambre de cylindre (22), un ressort de rappel (30) monté dans ledit alésage (24) et poussant ledit piston (23) vers l'extérieur de ladite chambre de cylindre (22), ledit alésage (24) ayant une surface périphérique interne munie d'un taraudage interne (25) ayant une section de forme dentelée, une tige de vis (26) ayant une surface périphérique externe munie d'un filet externe (27) ayant une section de forme dentelée, ladite tige de vis (26) étant insérée dans ledit alésage (24) ledit filet externe (27) étant en engagement par vissage avec ledit taraudage interne (25), ledit boîtier (21) étant muni d'un passage de fourniture d'huile (33) ayant une sortie communiquant avec une chambre de pression (32) définie dans ladite chambre de cylindre (22) par ledit piston (23), et un clapet antiretour (34) prévu à ladite sortie dudit passage de fourniture d'huile (33) et configuré pour fermer ledit passage de fourniture d'huile (33) lorsque la pression dans ladite chambre de pression (32) dépasse la pression dans ledit passage de fourniture d'huile (33),
**caractérisé en ce que**
ledit passage de fourniture d'huile (33) possède une entrée de grand diamètre (33a) s'ouvrant sur la périphérie externe du boîtier (21) et ledit tendeur de chaîne comprend en outre un filtre à huile (39) monté de manière amovible dans ladite entrée de grand diamètre (33a) dudit passage de fourniture d'huile (33) pour empêcher tout objet étranger pouvant être contenu dans l'huile fournie dans ledit passage de fourniture d'huile (33) d'être introduit dans ladite chambre de pression (32).

2. Tendeur de chaîne (20) selon la revendication 1, dans lequel ladite chambre de pression (32) communique avec l'extérieur du boîtier (21) à travers un passage d'évacuation d'huile (44), ledit tendeur de chaîne comprenant en outre une soupape de détente (45) montée dans ledit passage d'évacuation d'huile (44) pour ouvrir ledit passage d'évacuation d'huile (44) si la pression dans ladite chambre de pression (32) dépasse un certain seuil.

3. Tendeur de chaîne (20) selon l'une quelconque des revendications 1 ou 2, dans lequel le filtre à huile (39) est inséré dans un support en forme de couvercle (40) qui est monté de manière amovible dans l'entrée de grand diamètre (33a).

4. Tendeur de chaîne (20) selon l'une quelconque des revendications 1 à 3, dans lequel le support en forme de couvercle (40) est muni d'ouvertures (41) à travers lesquelles l'huile ayant été filtrée par le filtre à huile (39) peut s'écouler dans le passage de fourniture d'huile (33).

5. Tendeur de chaîne (20) selon l'une quelconque des revendications 1 à 4, dans lequel la taille des mailles dudit filtre à huile (39, 58) se situe dans la plage de 50 à 400 µm.
